# EUROPÄISCHE PATENTSCHRIFT

(11) **EP 2 616 512 B1**
(45) Veröffentlichungstag und Bekanntmachung des Hinweises auf die Patenterteilung: **01.10.2014**
(21) Anmeldenummer: 11748356.0
(22) Anmeldetag: 22.08.2011
(51) Int. Cl.: C08L 33/08, C08L 33/10

(54) **WITTERUNGSBESTÄNDIGE, EINGEFÄRBTE FORMKÖRPER MIT VERBESSERTEM GLANZ UND WISCHBESTÄNDIGKEIT**
WEATHER-RESISTANT, DYED MOLDED PART HAVING IMPROVED SHINE AND WIPE RESISTANCE
CORPS FAÇONNÉ TEINTÉ, RÉSISTANT AUX INTEMPÉRIES, AYANT UNE BRILLANCE AMÉLIORÉE ET UNE RÉSISTANCE AMÉLIORÉE AU FROTTEMENT

(30) Priorität: 22.09.2010 EP 10178326; 17.09.2010 US 384060 P
(43) Veröffentlichungstag der Anmeldung: 24.07.2013
(73) Patentinhaber: Evonik Röhm GmbH, 64293 Darmstadt (DE)
(72) Erfinder: KHRENOV, Victor, 60323 Frankfurt (DE); MISCHLICH, Andreas, 64331 Weiterstadt (DE); GOLCHERT, Ursula, 64807 Dieburg (DE); NAU, Stefan, 64572 Büttelborn (DE); HALBLÄNDER, Anton, 64347 Griesheim (DE); SCHULTES, Klaus, 65193 Wiesbaden (DE); POTH, Marc, 64354 Reinheim (DE); MANIS, Antonios, 64293 Darmstadt (DE); LEHMANN, Kathrin, 51377 Leverkusen (DE); ZHU, Zhen, Cheshire CT 06410 (US)
(86) Internationale Anmeldenummer: PCT/EP2011/064326
(87) Internationale Veröffentlichungsnummer: WO 2012/034821

(56) Entgegenhaltungen:
- EP-A1- 1 382 633
- EP-A2- 0 342 311

## Beschreibung

Gegenstand der vorliegenden Erfindung sind witterungsbeständige, eingefärbte Formkörper aus Poly(alkyl)(meth)acrylat mit verbessertem Glanz und Widerstand gegen mechanische Einwirkungen auf die Oberfläche des Formkörpers, insbesondere einer verbesserten Wisch- und Kratzbeständigkeit sowie Formmassen zur Herstellung derselben.

Transparente Kunststoffbauteile finden sich in zahlreichen Anwendungen: beispielweise als Blenden bei Haushaltgeräten, als Abdeckungen für Instrumente in Kraftfahrzeugen oder als Displays.

Die hohe optische Transparenz und die Abwesenheit einer Eigenfarbe von Polymethylmethacrylat (PMMA) Formmassen ermöglicht die Realisierung eines breiten Spektrums von verschiedenen Einfärbungen, die für dekorative Abdeckungen (z. B. verschiedene Blenden im Autointerieur und -exterieur) zum Einsatz kommen. Des Weiteren können durch den Einsatz von eingefärbten PMMA Formmassen Oberflächen der höchsten Güteklasse (s. g. Class A Oberflächen) realisiert werden, was für die Endanwendungen eine wichtige Rolle spielt.

Die Oberflächen der aus PMMA hergestellten Teile besitzen eine hohe Härte, die für deren Endanwendung als dekorative Abdeckung von entscheidender Bedeutung ist. Es ist allgemein bekannt, dass PMMA unter den thermoplastischen Werkstoffen derjenige mit der höchsten Oberflächenhärte und Kratzfestigkeit, bestimmt mittels der Bleistifthärteprüfung, ist. Dennoch müssen für einige Anwendungen mit besonders hohen Ansprüchen an die Oberflächen, insbesondere bei dekorativen und die Aufmerksamkeit anziehenden Teilen, selbst PMMA Formkörper gegen verschiedene Verschleißerscheinungen geschützt werden. Hierzu werden die Bauteile oftmals mit einer Beschichtung ausgestattet.

Allgemein stellt die Anfälligkeit von Kunststoffformkörpern gegenüber Wischspuren und Kratzern ein Problem dar, da die betreffenden Gegenstände sehr schnell unansehnlich werden. Es wurden daher zahlreiche Verfahren entwickelt, um Kunststoffe mit kratzfesten Schichten zu versehen. Als Beschichtungsmaterialien werden bevorzugt härtbare Kunststoffharze verwendet. Genannt seien beispielsweise Beschichtungen von Polyestern mit einem Dialdehyd (z. B. US 3484157), Polyurethanen (z. B. DE 2611782), mit Alkyltitanat (z. B. US 3700487), Melamin in den verschiedensten Variationen oder Melamin-Polyol (z. B. GB 1308697, US 3862261). Weiter sind Acrylharze der verschiedensten Arten (z. B. DE 2317874), fluorierte Kohlenwasserstoffe in den verschiedensten Kombinationen und Modifikationen (NL 6608316, DE 1963278, DE 2454076), vernetzte Polyalkyleniminverbindungen (US 3766299) und Siliciumverbindungen, insbesondere Silikonharze (z. B. BE 821403, US 3451838, US 3707397) zur Beschichtung herangezogen worden. Die EP 180129 beschreibt ein Verfahren zur Beschichtung von Kunststoffen mit Kratzfest- und Antireflexwirkung bestehend aus Acrylat- oder Methacrylatpolymeren, Silicium-organischen Polymerisaten oder Melaminharzen.

Es wurden auch verschiedenste Sol-Gel-Systeme beschrieben, die u. a. mit Hilfe von Plasma-Verfahren eingesetzt werden können. Diese Systeme werden häufig aus modifizierten Silanen und Alkoxiden durch Hydrolyse- und Kondensationsprozesse hergestellt. Aufgrund der Reaktivität dieser Systeme ist die Lagerstabilität der Lackmischung meist sehr kurz. Des Weiteren werden auch strahlungshärtbare Beschichtungsmittel zur Beschichtung von Kunststoffsubstraten eingesetzt. So werden in der US 6,420,451 strahlungshärtbare Beschichtungsmittel für die Beschichtung von optischen Substraten, beispielsweise Linsen, aus verschiedenen Kunststoffsubstraten, wie beispielsweise Polycarbonat, beschrieben. Die Beschichtungsmittel enthalten neben monofunktionellen Acrylaten Urethanacrylate und kolloidale Metalloxide, insbesondere SiO₂-Teilchen.

Allen zuvor beschriebenen Verfahren ist gemein, dass sie zusätzliche und aufwendige Arbeitsschritte, nämlich Applizierung und Aushärtung des Lacksystems/ Beschichtungsmittels, benötigen.

Speziell zur Verbesserung der Kratzfestigkeit von thermoplastischen Elastomeren, insbesondere Polyurethanen (TPU), Polyamiden (PEBA), Copolyestern (COPE) und Styrenolen (S-TPE), wurden daher von der Fa. Evonik Goldschmidt GmbH in der EP 1 640 418 organomodifizierte Siloxane als Additive vorgeschlagen. Diese Siloxane werden als Additiv direkt der Formmasse zugegeben. Sie bilden auf der Oberfläche des aus der Formmasse hergestellten Formteils eine Art Schmierfilm. Beschädigungen der Oberfläche werden dadurch verhindert, sodass der auf das Formteil einwirkende Gegenstand über die Oberfläche gleiten kann. Die Formkörper bedürfen daher angeblich keiner zusätzlichen Beschichtung mit einem Kratzfestlack.

Eine genauere Betrachtung der EP 1 640 418 zeigt, dass es sich bei den dort verwendeten Kunststoffen um - im Vergleich zu PMMA - sehr weiche Kunststoffe handelt. Diese weisen eine elastische Oberfläche auf und sind daher schon von sich aus weniger empfindlich gegen mechanische Einwirkungen mit scharfen oder spitzen Gegenständen. Somit stellen solche elastischen Polymere ganz andere Anforderungen im Hinblick auf eine kratzfeste Ausrüstung als die z. B. sehr harte Oberfläche von PMMA Formteilen. Einen Hinweis darauf, dass organomodifizierte Siloxane auch die Wischfestigkeit von Oberflächen von PMMA Formteilen verbessern können, gibt es in der EP 1 640 418 nicht. Dies ist aus der EP 1 640 418 auch nicht ableitbar, da dort wie gesagt völlig andere Polymere verwendet werden.

In der DE 100 59 454 werden ebenfalls Additive mit Siloxaneinheiten vorgeschlagen, welche die Kratzfestigkeit von Oberflächen von Formteilen aus verschiedenen Polymeren verbessern sollen. Es handelt sich dabei um Polyester-Polysiloxane modifizierte Polyolefine, die durch Umsetzung von Säureanhydrid-gepfropften Polyolefinen mit hydroxyfunktionellen Organopolysiloxanen erhalten werden. Diese Polyester-Polysiloxan-Copolymere werden als Additiv in die Polymermatrix zugegeben. Nachteilig an diesem Verfahren ist jedoch die aufwendige Herstellung der Polyester-Polysiloxan-Copolymere.

Hinsichtlich der Auswirkungen der verschiedenen im Stand der Technik vorgeschlagenen Additive auf die Farberscheinung der Formmassen wird im Stand der Technik nichts ausgesagt.

Es besteht somit nach wie vor ein Bedarf an neuartigen Poly(alkyl)(methacrylat)formmassen bzw. Additiven für Poly(alkyl)(methacrylat)formmassen, die es erlauben, Formteile, insbesondere eingefärbte, ganz besonders schwarz eingefärbte, Formteile mit hoher Farbbrillanz, hohem Glanz und sehr guter Beständigkeit gegenüber mechanischen Einflüssen auf die Oberfläche der Formteile, insbesondere Wisch- und Kratzbeständigkeit herzustellen, ohne dass die Oberfläche mit einer Beschichtung geschützt werden muss.

Ausgehend vom zuvor beschriebenen Stand der Technik bestand die Aufgabe der vorliegenden Erfindung somit darin, wischfest ausgerüstete Kunststoffformkörper bzw. Formmassen zu deren Herstellung zur Verfügung zu stellen, die die Nachteile der Formkörper bzw. Formmassen des Standes der Technik nicht oder nur in verringertem Maße aufweisen.

Eine spezielle Aufgabe bestand darin Kunststoffformkörper zur Verfügung zu stellen, die ohne eine zusätzliche kratzfeste Beschichtung oder Folie eine gute Beständigkeit gegenüber mechanischen Einflüssen, insbesondere Wischen, aufweisen.

Ebenfalls Aufgabe der vorliegenden Erfindung war es Kunststoffformkörper bzw. Formmassen zu deren Herstellung zur Verfügung zu stellen, die eine hohe Farbbrillanz und einen hohen Glanz sowie eine hohe Oberflächengüte aufweisen. Insbesondere bei dunklen Farbtönen wie z. B. schwarz oder braun, sollen keine Grauschleier zu erkennen sein.

Weitere nicht explizit genannte Aufgaben ergeben sich aus dem Gesamtzusammenhang der nachfolgenden Beschreibung, Beispiele und Ansprüche.

Es wurde nun überraschend gefunden, dass durch den Einsatz von speziell aufgebauten organomodifizierten Polysiloxanen bzw. von Polysiloxan(-blockcopolymeren) mit Polysiloxan- und Polyesterblöcken die Wischbeständigkeit von Oberflächen von Formkörpern, die aus Poly(alkyl)(meth)acrylaten hergestellt wurden, deutlich verbessert werden kann. Es zeigte sich zudem, dass durch diese speziellen Polysiloxane bzw. Polysiloxan(-blockcopolymeren) dunkel, insbesondere schwarz, eingefärbte Formmassen und Formteile erhalten werden können, welche keinen Grauschleier aufweisen.

Mit den erfindungsgemäßen Formmassen können eingefärbte Kunststoffformteile mit hoher Oberflächengüte und Farbbrillianz hergestellt werden, welche ohne eine zusätzliche Kratzfestbeschichtung bzw. Folie, eine sehr gute Widerstandsfähigkeit gegen Wischen, Scheuern und Kratzen aufweisen.

Es können somit im Vergleich zum Stand der Technik Verfahrensschritte sowie Kosten für Material und Herstellung der Formkörper gespart werden.

Es ist mit der vorliegenden Erfindung erstmals gelungen wischfeste schwarze Formkörper ohne Grauschleier aus Poly(alkyl)(meth)acrylaten zu erhalten und es somit zu ermöglichen, deren exzellente Witterungsstabilität zum Tragen zu bringen. Die erfindungsgemäßen Formkörper können somit sowohl im Innen- als auch im Außenbereich eingesetzt werden.

Die Erfinder haben herausgefunden, dass es grundsätzlich möglich ist, die Beständigkeit von Oberflächen von Formkörpern aus Poly(alkyl)(meth)acrylaten gegenüber mechanischen Einwirkungen, insbesondere Wischen und Kratzen, durch Verwendung von speziellen organomodifizierten Polysiloxanen und/oder Polysiloxan(-blockcopolymeren) zu verbessern. Es hat sich dabei jedoch gezeigt, dass viele zur Verbesserung der Kratzfestigkeit von Polymeroberflächen auf dem Markt angebotenen Polysiloxan-Additive zu einem Grauschleier bei schwarzen Formteilen führten oder keine hinreichende Wischbeständigkeit erzielt werden konnte. Nähere Angaben hierzu finden sich in den Vergleichsbeispielen. Die zuvor bei der Beschreibung des Standes der Technik getroffenen Aussagen, dass man Additve, die bei weichen Polymeren zur Verbesserung der Kratzfestigkeit eingesetzt werden können, nicht einfach auf harte Polymere übertrage kann, haben sich bestätigt.

Als Ergebnis umfangreicher Untersuchungen hat sich nun ergeben, dass Verbindungen der Formel (I) 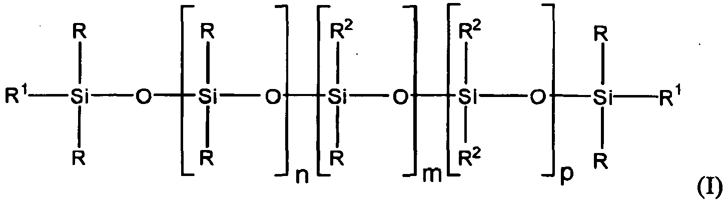 mit R, R¹, R², n, m und p wie unten definiert, geeignet sind daraus Poly(alkyl)(meth)acrylat Formmassen und Formkörper herzustellen, die die o.g. Aufgaben hervorragend lösen. Die Oberflächengüte der Poly(alkyl)(meth)acrylat Formkörper wird durch das Additiv nicht bzw. nur sehr wenig negativ beeinflusst, so dass die erfindungsgemäßen Formkörper eine exzellente Oberflächengüte aufweisen.

Gegenstand der vorliegenden Erfindung sind daher Formmassen enthaltend ein Poly(alkyl)(meth)acrylat-Matrixmaterial und mindestens eine Verbindung der Formel (I).

Auch Gegenstand der vorliegenden Erfindung ist die Verwendung der erfindungsgemäßen Formmassen zur Herstellung von Formköpern.

Gegenstand der vorliegenden Erfindung sind somit auch Formkörper umfassend einen Kunststoff, enthaltend eine Poly(alkyl)(meth)acrylat-Matrix und eine Verbindung der Formel (I) wie unten definiert.

Schließlich ist Gegenstand der vorliegenden Erfindung die Verwendung der erfindungsgemäßen Formkörper als dekorative Abdeckblenden oder funktionelle Anbauteile, in Kraftfahrzeugen, Unterhaltungselektronik oder in Haushaltgeräten.

Die Gegenstände der vorliegenden Erfindung werden nachfolgend im Detail beschrieben.

Im Rahmen der vorliegenden Erfindung werden die Begriffe Formkörper und Formteil synonym verwendet. Unter "(Meth)acrylat" werden sowohl Methacrylate als auch Acrylate verstanden.

Die erfindungsgemäßen Formmassen umfassen
a) ein Poly(alkyl)(meth)acrylat-Matrixmaterial
b) zumindest eine Verbindung der Formel (I) 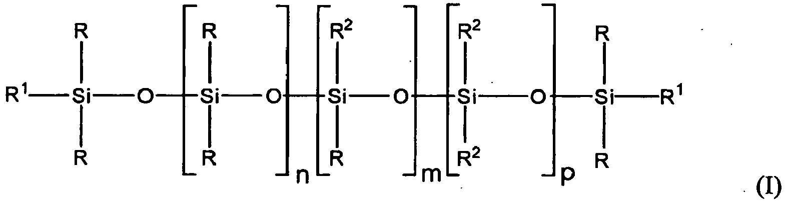
mit
R unabhängig voneinander ein Alkylrest mit 1 bis 11, bevorzugt 1 bis 4 Kohlenstoffatomen, vorzugsweise ein Methylrest,
R¹ unabhängig voneinander gleich R oder ein Polyesterrest,
R² unabhängig voneinander gleich R, ein Polyesterrest oder ein Kohlenwasserstoffrest mit 12 bis 36 Kohlenstoffatomen, vorzugsweise von 20 bis 30 Kohlenstoffatomen, bevorzugt von 24 bis 30 Kohlenstoffatomen,
n, m und p unabhängig voneinander von 0 bis 58, mit der Maßgabe,
dass N = n + m + p + 2 von 15 bis 75, vorzugsweise 20 bis 50 ist
und
dass alle R¹ ungleich R sind wenn alle R² gleich R sind und wenigstens ein R² ungleich R ist wenn alle R¹ gleich R sind
und/oder
dass alle Reste R¹ ungleich R sind, wenn m und p 0 sind und dass m oder p, vorzugsweise m, ungleich 0 ist, wenn alle Reste R¹ gleich R sind.

Die in den Formeln verwendeten Indices sind als statistische Mittelwerte (Zahlenmittel) zu betrachten.

Vorzugsweise sind solche Verbindungen der Formel (I) vorhanden, bei denen p = 0 ist.

Handelt es sich bei den Resten R¹ und/oder R² um Polyesterreste so sind diese vorzugsweise aus 3 bis 30, bevorzugt aus 8 bis 25 und besonders bevorzugt aus 15 bis 25 Estereinheiten aufgebaut. Als Startalkohole können die Polyesterreste solche Alkoholreste aufweisen, die sich von primären ungesättigten Alkoholen ableiten (siehe Herstellverfahren). Die Polyesterreste weisen vorzugsweise eine Struktur gemäß Formel (II) auf:

-R^{q}-(R^{r})_{z}H (II)

mit
R^{q} = -(CH₂)ₓ-O-,
R^{r} = C(O-(CH₂)_{y}-O-
x = 2 bis 10, vorzugsweise 3 bis 7, insbeosndere 6 und
y = 2 bis 10, vorzugsweise 3 bis 8 und bevorzugt 4 oder 5.
Z = 3 bis 30, bevorzugt aus 8 bis 25 und besonders bevorzugt aus 15 bis 25.

Die Bezeichnungen "q" und "r" dienen lediglich der Unterscheidung der Reste von den anderen "R"-Resten und stellen keine Indizes dar, die mit irgendeinem Zahlenwert hinterlegt sind.

Die Polyesterreste können aus gleichen oder unterschiedlichen Ausgangsmolekülen aufgebaut sein. Vorzugsweise sind die Polyesterreste aus gleichen Ausgangsmolekülen aufgebaut. Bevorzugte Polyesterreste sind solche, die durch, vorzugsweise ringöffnende, (Poly-)Veresterung von Lactonen erhalten werden. Besonders bevorzugt sind die Polyesterreste solche, die durch (Poly-)veresterung von Caprolacton oder Valerolacton, insbesondere von ε-Caprolacton, 3,5,5-Trimethyl-Caprolacton oder δ-Valerolacton und besonders bevorzugt von ε-Caprolacton erhalten werden. Bevorzugte Verbindungen der Formel (I) bei denen R¹ und/oder R² Polyesterreste sind solche, bei denen der Polyesterrest aus 3 bis 30, bevorzugt aus 8 bis 25 und besonders bevorzugt aus 15 bis 25 ε-Caprolacton-Einheiten aufgebaut ist. Vorzugsweise sind die Reste R¹ identische Polyesterreste.

Es kann vorteilhaft sein, wenn neben den Resten R¹ auch einer oder mehrere der Reste R² ein Polyesterrest ist. Sind in den Verbindungen der Formel (I) sowohl die Reste R¹ als auch ein oder mehrere der Reste R² Polyesterreste, so sind diese Polyesterreste vorzugsweise identisch (weisen die gleiche Anzahl an Einheiten des Ausgangsmoleküls auf).

Sind die Reste R¹ alle gleich R, mit R vorzugsweise Methylrest, ist R² bevorzugt ein Kohlenwasserstoffrest mit 12 bis 36 Kohlenstoffatomen, vorzugsweise von 20 bis 30 Kohlenstoffatomen, bevorzugt von 24 bis 30 Kohlenstoffatomen, so ist N bevorzugt größer-gleich 30, vorzugsweise von 40 bis 50. p ist im genannten Fall vorzugsweise 0 und m beträgt bevorzugt von 30 bis 48.

Sind einer oder mehrere der Reste R¹ und/oder R² ein Polyesterrest, so ist N bevorzugt 10 bis 45, bevorzugt 20 bis 30 und besonders bevorzugt 20 bis kleiner 30. Sind die Reste R² Polyesterreste so ist p vorzugsweise 0 und m hat einen Wert von 1 bis 10, bevorzugt von 2 bis 5.

Die verwendeten Verbindungen der Formel (I) sind vorzugsweise solche, bei denen die Reste R² entweder ausschließlich Polyesterreste oder ausschließlich Kohlenwasserstoffreste mit 12 bis 36 Kohlenstoffatomen sind.

Bevorzugte Verbindungen der Formel (I), bei denen ausschließlich Reste R² vorhanden sind, die Kohlenwasserstoffreste sind, sind solche, bei denen R¹ = R = Methyl, N = 40 bis 50, insbesondere 40 oder 50 ist, und die Reste R² Alkylreste mit 30 Kohlenstoffatomen oder ein Gemisch von Alkylresten mit 24 bis 28 Kohlenstoffatomen sind.

Bevorzugte Verbindungen der Formel (I), bei denen ausschließlich Reste R¹ und/oder R² vorhanden sind, die Polyesterreste sind, sind solche, bei denen R = Methyl und N = 20 bis 45 ist, und bei denen die Polyesterreste von 15 bis 25 Estereinheiten aufweisen.

Besonders bevorzugte Verbindungen der Formel (I) mit p = 0, R^{q} = Hexanolrest und R = Methyl können der nachfolgenden Tabelle 1 entnommen werden.

**Tabelle 1: Besonders bevorzugte Verbindungen der Formel (I)**

| N | m | R¹ | R² |
|---|---|---|---|
| 30 | 0 | Jeweils Polyesterrest mit 20 Caprolacton-Einheiten | - |
| 50 | 48 | Methyl | Alkylrest mit 24 bis 28 C-Atomen |
| 22 | 0 | Jeweils Polyesterrest mit 18 Caprolacton-Einheiten | |
| 30 | 2 | Jeweils Polyesterrest mit 15 Caprolacton-Einheiten | Jeweils Polyesterrest mit 15 Caprolacton-Einheiten |
| 43 | 5 | Methyl | Jeweils Polyesterrest mit 25 Caprolacton-Einheiten |
| 40 | 38 | Methyl | Alkylrest mit 24 bis 28 C-Atomen |
| 50 | 30 | Methyl | Alkylrest mit 30 C-Atomen |

Geeignete Verbindungen der Formel (I) sind z.B. TEGOMER® H-Si 6440 P und TEGOPREN 6846, welche von Evonik Goldschmidt GmbH erhalten werden können.

Die Verbindungen der Formel (I) können nach den bekannten Verfahren durch Umsetzung von entsprechenden Wasserstoffsiloxanen mit ungesättigten Kohlenwasserstoffen oder ungesättigten Alkoholen und anschließender (Poly-)-Veresterung oder durch direkte Umsetzung von ungesättigten Polyestern mit Wasserstoffsiloxanen erhalten werden. Die Umsetzung kann wie in EP 1 640 418 beschrieben durch Hydrosilylierung bzw. durch dehydrogenative Hydrosilylierung erfolgen. Die Herstellung Polyesterreste aufweisender Polysiloxane kann z. B. EP 0 208 734 entnommen werden. Zur Vermeidung reiner Wiederholungen werden die Inhalte besagter Patentschriften hiermit explizit in den Inhalt der Beschreibung der vorliegenden Erfindung mit einbezogen.

Die erfindungsgemäßen Formmassen enthalten bevorzugt weitere Additve wie Farbmittel, Pigmente und/oder organische Farbstoffe, Lichtstabilisatoren, UV-Stabilisatoren, UV-Absorber, IR-Absorber, antimikrobielle Wirkstoffe, Flammschutzmittel, Thermostabilisatoren, Antioxidantien, vernetzende Polymere, faserverstärkende Zusatzstoffe organischer oder anorganischer Art. Bevorzugt sind in den erfindungsgemäßen Formmassen bzw. Formkörpern nicht mehr als 10 Gew. %, besonders bevorzugt nicht mehr als 5 Gew. % und insbesondere nicht mehr als 2 Gew. % Hilfs- und Füllstoffe enthalten.

Besonders bevorzugt sind die erfindungsgemäßen Formmassen und Formkörper mit dunklen Farbtönen, insbesondere blau, grün, braun oder schwarz eingefärbt.

In einer besonders bevorzugten Ausführungsform enthalten die erfindungsgemäßen Formmassen bzw. der Formkörper ein Schlagzähmodifizierungsmittel, insbesondere in einem Anteil von 0,1 bis 15 Gew.%, bevorzugt 0,5 bis 10 Gew.% und ganz besonders bevorzugt 1 bis 6 Gew. %, jeweils bezogen auf die Gesamtmasse der Formmasse bzw. des Formkörpers. Es können alle handelsüblichen Schlagzähmodifizierungsmittel verwendet werden, insbesondere Elastomerteilchen mit einem mittleren Teilchendurchmesser von 10 bis 300 nm (Messungen z. B. mit der Ultrazentrifugenmethode). Bevorzugt weisen die Elastomerteilchen einen Kern mit einer weichen Elastomerphase und zumindest einer daran gebundenen Hartphase auf.

Bei dem erfindungsgemäß als Komponente a) verwendeten Poly(alkyl)(meth)acrylat-Matrixmaterial handelt es sich bevorzugt um Homo- oder Copolymere von Methylmethacrylat. Mischungen sowie Blends aus verschiedenen Poly(alkyl)(meth)acrylaten und anderen Polymeren sind ebenfalls umfasst. Auch ein Copolymer aus zumindest einem Poly(alkyl)(meth)acrylat und weiteren Comonomeren ist Gegenstand der vorliegenden Erfindung. Die erfindungsgemäße Komponente a) ist kein thermoplastisches Elastomer.

Unter "alkyl" werden dabei verzweigte oder unverzweigte, cyclische oder lineare Alkylreste mit 1 bis 20, bevorzugt 1 bis 8, besonders bevorzugt 1 bis 4 Kohlenstoffatomen, welche mit funktionellen Gruppen substituiert sein oder Heteroatome wie O, S oder N aufweisen können. Bevorzugt handelt es sich um einen Methyl, Ethyl, Butyl oder Cyclohexyl-Rest.

In einer ersten bevorzugten Ausführungsform handelt es sich bei Komponente a) um eine Mischung umfassend ein Copolymer (I) und ein (Co)polymer (II). Diese Mischung und die Copolymere werden nachfolgend näher beschrieben.

Das Copolymer (I) der Mischung wird polymerisiert zu 80 bis 100, bevorzugt zu 90 bis 100, insbesondere zu 99 bis 100 Gew. -% aus Methylmethacrylat, Styrol und Maleinsäureanhydrid und gegebenenfalls 0 - 20, bevorzugt zu 0 - 10, insbesondere zu 0 bis 1 Gew. -% weiteren radikalisch polymerisierbaren Comonomere, bevorzugt α-Methylstyrol oder C₁- bis C₄-Alkyl(meth)acrylate, insbesondere Methylacrylat, Ethylacrylat oder Butylacrylat, insbesondere n- Butylacrylat. Besonders bevorzugt besteht das Copolymer (I) ausschließlich aus radikalisch polymerisierten Einheiten von Methylmethacrylat, Styrol und Maleinsäureanhydrid.

Als besonders bevorzugte Mengenanteile haben sich erwiesen:
- 65 bis 85, bevorzugt 70 bis 80 Gew.-% Methylmethacrylat,
- 10 bis 20, bevorzugt 12 bis 18 Gew. -% Styrol und
- 5 bis 15, bevorzugt 8 bis 12 Gew.-% Maleinsäureanhydrid,
wobei von der vorliegenden Erfindung nur solche Kombinationen der drei Monomere umfasst sind, die in Summe 100 Gew. % ergeben. Aus den o. g. Mengenangaben lassen sich theoretisch auch Dreierkombinationen zusammenstellen, die weniger oder mehr als 100 Gew. % ergeben, diese sind jedoch nicht Bestandteil der vorliegenden Erfindung. Erfindungsgemäße Kombinationen können von einem Fachmann im Rahmen der o. g. Mengenbereiche einfach ermittelt werden.

Das Copolymer (I) weist eine Lösungsviskosität in Chloroform bei 25 C (ISO 1628 - Teil 6) von kleiner/gleich 55, bevorzugt kleiner/gleich 50, insbesondere 40 bis 55, besonders bevorzugt von 43 - 50 ml/g auf.

Copolymer (I) weist bevorzugt ein Molekulargewicht Mw (Gewichtsmittel) im Bereich von 50 000 bis 250 000 g/mol und besonders bevorzugt im Bereich von 70 000 bis 120 000 g/mol (Bestimmung von Mw mittels Gelpermeationschromatographie unter Bezug auf Polymethylmethacrylat als Eichstandard) auf.

Das (Co)polymer (II) der Mischung wird polymerisiert aus 80 - 100 Gew.-%, bevorzugt 90 bis 99,5 Gew.-% Methylmethacrylat Einheiten und gegebenenfalls 0 - 20 Gew.-%, bevorzugt 0,5 bis 10 Gew.-% weiteren mit Methylmethacrylat redikalisch copolymerisierbaren Monomeren bevorzugt C₁- bis C₄-Alkyl(meth)acrylate, insbesondere Methylacrylat, Ethylacrylat oder Butylacrylat, insbesondere n-Butylacrylat.

In einer besonders bevorzugten Ausführungsform besteht das (Co) polymer (II) aus 95 bis 99,5 Gew.-% Methylmethacrylat Einheiten und 0,5 - 5 Gew.-%, bevorzugt 1 bis 4 Gew.-% eines der oben genannten, mit Methylmethacrylat radikalisch copolymerisierbaren, Monomeren, insbesondere Methylacrylat.

Das (Co)polymer (II) weist eine Lösungsviskosität in Chloroform bei 25 C (ISO 1628 - Teil 6) von 50 bis 55 ml/g, bevorzugt 52 bis 54 ml/g.

(Co)polymer (II) weist bevorzugt einem Molekulargewicht Mw (Gewichtsmittel) von 80000 bis 200000 g/mol, bevorzugt 90000 bis 200000 g/mol und besonders bevorzugt 100000 bis 150000 g/mol auf. Die Bestimmung des Molekulargewichts Mw erfolgt wie für Copolymer (I) beschrieben.

Das (Co)polymer (II) kann bevorzugt eine Vicaterweichungstemperatur VET (ISO 306- B50) von mindestens 107, bevorzugt von 108 bis 114°C und/oder einen Schmelzindex MVR (ISO 1133,230 C / 3,8 kg) im Bereich von größer/gleich 2,5 cm /10 min aufweisen.

Bevorzugt liegen die Copolymere (I) und das (Co)polymer (II) in einem Verhältnis Copolymere (I) zu (Co)polymer (II) von 95 zu 5 bis 5 zu 95, bevorzugt 20 zu 80 bis 80 zu 20, insbesondere 20 zu 60 bis 80 zu 40 jeweils bezogen auf Gewichtsteile vor.

Details zu der oben beschriebenen Mischung sowie der Herstellung der einzelnen Polymere und der Polymermischung können der WO 2005/108486 entnommen werden. Zur Vermeidung von Wiederholungen wird der Gegenstand dieser Anmeldung hiermit explizit in die Beschreibung der vorliegenden Anmeldung mit aufgenommen.

In einer zweiten bevorzugten Ausführungsform handelt es sich bei dem Matrixmaterial a) um eine Polymermischung, die die folgenden Komponenten enthält:
A) ein niedermolekulares (Meth)acrylat(co)polymer, charakterisiert durch eine Lösungsviskosität in Chloroform bei 25°C (ISO 1628 - Teil 6) von kleiner/gleich 55 ml/g. Die Komponente A) entspricht bevorzugt dem oben bei der ersten bevorzugten Ausführungsform beschriebenen Copolymer (I)
   und/oder
B) ein höhermolekulares (Meth)acrylat(co)polymer, charakterisiert durch eine Lösungsviskosität in Chloroform bei 25°C (ISO 1628 - Teil 6) von grösser/gleich 65 ml/g
   und/oder
C) ein weiteres von A) verschiedenes (Meth)acrylat(co)polymer, charakterisiert durch eine Lösungsviskosität in Chloroform bei 25°C (ISO 1628 - Teil 6) von 50 bis 55 ml/g
wobei die Komponenten A), B) und/oder C) jeweils für sich genommen als einzelne Polymere als auch als Mischungen von Polymeren verstanden werden können, wobei A), B) und/oder C) sich zu 100 Gew.-% addieren.

Die Komponente B) ist eine optionale Komponente, die allein oder zusammen mit der Komponente C) vorliegen kann. Die Komponente B) kann in der Monomerzusammensetzung mit der Komponente A) übereinstimmen. Die Herstellung kann weitgehend analog erfolgen mit dem Unterschied, dass man die Polymerisationsparameter so wählt, dass man höhermolekulare Polymerisate und somit eine höhere Lösungsviskosität in Chloroform erhält. Dies kann z. B. durch eine Absenkung der eingesetzten Molekulargewichtsreglermenge geschehen.

Die Komponente B) ist ein höhermolekulares (Meth)acrylat(co)polymer, charakterisiert durch eine Lösungsviskosität in Chloroform bei 25°C (ISO 1628 - Teil 6) von größer/gleich 65, bevorzugt 68 bis 75 ml/g.

Dies kann einem Molekulargewicht Mw (Gewichtsmittel) von 100 000 bis 300 000 g/mol und besonders bevorzugt im Bereich von 120 000 bis 180 000 g/mol (Bestimmung siehe oben) entsprechen.

Die Komponente C) ist eine optionale Komponente, die allein oder zusammen mit der Komponente B) eingesetzt/verwendet werden kann. Die Komponente C) entspricht bevorzugt dem oben für die erste bevorzugte Ausführungsform beschriebenen (Co)polymer (II).

Die Komponenten A) bis C) liegen besonders bevorzugt in folgenden Mengenverhältnissen vor, die sich zu 100 Gew.-% addieren.

| | |
|---|---|
| Komponente A): | 50 bis 90, bevorzugt 60 bis 88 Gew.-%. |
| Komponente B): | und/oder C): 10 bis 50, bevorzugt 12 bis 40 Gew.-%. |

In einer speziell bevorzugten Abwandlung der 2. bevorzugten Ausführungsform umfasst die Polymermatrix zusätzlich ein Schlagzähmodifizierungsmittel D). In diesem Fall liegen die Komponenten A) bis D) in folgenden Mengenverhältnissen vor, die sich zu 100 Gew.-% addieren.

| | |
|---|---|
| Komponente A): | 25 bis 75, bevorzugt 40 bis 60, insbesondere 45 bis 57 Gew.-%, |
| Komponente B) und/oder C): | 10 bis 50, bevorzugt 12 bis 44 Gew.-%, |
| Komponente D): | 7 bis 60, bevorzugt 7 bis 20 Gew.-%. |

Weitere Details zu der oben beschriebenen Polymermischung, den einzelnen Komponenten, sowie der Herstellung der einzelnen Komponenten und der Polymermischung können der EP 1673409 und der EP 1844102 entnommen werden. Zur Vermeidung von Wiederholungen wird der Gegenstand dieser Anmeldungen hiermit explizit in die Beschreibung der vorliegenden Anmeldung mit aufgenommen.

In einer dritten besonders bevorzugte Ausführungsform kann erfindungsgemäß als Komponente a) ein Blend aus
einem höhermolekularen (Meth)acrylat(co)polymer, charakterisiert durch eine Lösungsviskosität in Chloroform bei 25°C (ISO 1628 - Teil 6) von 50 bis 55 ml/g wie für die bevorzugte Ausführungsform 2 beschrieben
und
einem Styrol/Maleinsäureanhydridcopolymer, besonders bevorzugt einem Copolymer aus der Xiran^{®}-Familie, verwendet werden.

Die erfindungsgemäßen Formmassen enthalten bevorzugt 0,1 bis 10 Gew.%, besonders bevorzugt 0,3 bis 5 Gew.%, ganz besonders bevorzugt im Bereich von 0,5 bis 4,0 Gew.% und speziell bevorzugt im Bereich von 1 bis 3 Gew.%, der Polysiloxankomponente b).

Die Einarbeitung der erfindungsgemäßen Komponente b) kann nach allen dem Fachmann bekannten Verfahren erfolgen. So wird z. B. das Matrix-Polymer mit der Polysiloxankomponente b) und möglichen anderen Inhaltstoffen, wie z.B. Pigmente, Füllstoffe und andere Additive, wie z.B. Antioxidantien oder Antistatik-Additive vorgemischt. Zur Vormischung dienen Mischaggregate wie z. B. Henschel- oder Taumelmischer.

Erfindungsgemäße Verbindungen werden anschließend bevorzugt unter der Einwirkung von Scherkräften, z. B. Einarbeitung auf einem Extruder in das Polymer eingebettet. Alternativ ist die Einarbeitung auch in einem Kneter oder unter Aufschmelzen in einem Reaktor denkbar.

Aus den erfindungsgemäßen Formmassen können nach allen dem Fachmann bekannten Verfahren die erfindungsgemäßen Formkörper hergestellt werden.

Bevorzugte Verfahren sind Spritzgießen, Thermoformen oder Extrusion, dabei besonders bevorzugt sind verschiedene Ausführungen des Spritzgußverfahrens.

Die erfindungsgemäßen Formkörper können vollständig aus der erfindungsgemäßen Formmasse hergestellt werden, was bevorzugt ist.

Es kann sich jedoch auch um ein Mehrkomponentenbauteil, z. B. hergestellt durch Coextrusion, Mehrkomponentenspritzguß etc. handeln, bei denen aus der erfindungsgemäßen Formmasse nur eine oder mehrere Schichten/Teile des Formkörpers hergestellt werden. In diesem Fall beträgt der Anteil der erfindungsgemäßen Formmasse am gesamten Formkörper bevorzugt 0,1% bis 99,9% Gew. %, besonders bevorzugt 10 bis 30 Gew. %. Die erfindungsgemäßen Formkörper zeichnen sich unter anderem dadurch aus, dass sie eine Oberfläche der höchsten Güte aufweisen und mit Hilfe des Polymethylmethacrylats und des Zusatzes der o. g. Additiven vor der Schädigung bzw. des Verlustes der Oberflächengüte bewahrt werden können.

Auch wenn der besondere Vorteil der erfindungsgemäßen Formteile darin zu sehen ist, dass die Oberfläche kratz- und wischfest ist, so schließt dies dennoch nicht aus, dass die erfindungsgemäß hergestellten Formteile ganz oder teilweise mit einer Folie oder einem Lack beschichtet werden.

Die erfindungsgemäßen Formteile können bevorzugt verwendet werden als dekorative Abdeckblenden oder funktionelle Anbauteile, in Kraftfahrzeugen, Unterhaltungselektronik oder in Haushaltgeräten.

### Meßmethoden:

Die Prüfung der Formmassen erfolgte wie folgt:

| | |
|---|---|
| Mini-Vicat | Bestimmung der VicatErweichungstemperatur auf einer Mini-Vicat-Anlage. Prüfnorm DIN ISO 306 |
| MVR | Bestimmung der Schmelzviskosität MVR erfolgte gemäß der Prüfnorm ISO 1133 |
| Crockmaster 670 | bestimmt nach EN ISO X12 bzw. BS 1006 X12 mit Crocking Cloth und 9N-Auflagegewicht und beweglichem Zylinder mit 1,5 cm Durchmesser eben, Beurteilung der Zerkratzung nach 100 bzw. 250 Bewegungen, 100 Bewegungen pro Minute vorwärts/rückwärts, |
| | Hersteller: James H. Heal/UK |
| Multifingertest | Gerät Taber 710 bestimmt nach BN 108-13 bzw. GMN 3943, Bestimmt wird, ob eine Spitze (Durchmesser 1 mm) bei einem unterschiedlichen Auflagegewicht resultierend in 2, 5, 10, 12 und 15 N zu einem visuell wahrnehmbaren Kratzer führt. Dabei bewegen sich die fünf Spitzen mit 7,5 Meter pro Minute über die zu zerkratzende Fläche und erfindungsgemäß basierende Oberflächen weisen weniger Kratzer oder weniger tiefe Kratzer auf als Oberflächen nichterfindungsgemäß beanspruchter Formkörper, Hersteller: Elcometer |
| Glanz | bestimmt nach DIN 5036 |

Die nachfolgenden Beispiele dienen zur näheren Erläuterung bzw. zum besseren Verständnis der vorliegenden Erfindung, schränken diese aber in keiner Weise ein.

### Beispiele:

### Allgemeine Beschreibung

Die Herstellung von Formmassen-Compounds erfolgte auf einer ZSK30 Maschine (Fa. Werner@Pfleiderer). Anschließend wurden die Compounds auf einer DEMAG Spritzgussmaschine zur 200*100*3 mm Platten verarbeitet.

### Beispiel 1

In einem Taumelmischer werden 9,7 kg PLEXIGLAS® 8N der Fa. Evonik Röhm GmbH, welche schwarz eingefärbt wurde, mit 0,3 kg von TEGOMER® H-Si 6440P, der Evonik Goldschmidt GmbH gemischt und wie in der allgemeinen Beschreibung erläutert zu einem Compound extrudiert.

### Bespiel 2

In einem Taumelmischer werden 9,7 kg einer Formmasse gemäß Beispiel A der WO 2005/108486, welche schwarz eingefärbt wurde, mit 0,3 kg von TEGOMER® H-Si 6440P gemischt und wie in der allgemeinen Beschreibung erläutert zu einem Compound extrudiert.

### Beispiel 3

In einem Taumelmischer werden 9,7 kg einer Formmasse gemäß Beispiel B der WO 2005/108486, welche schwarz eingefärbt wurde, mit 0,2 kg von TEGOMER® H-Si 6846P, der Evonik Goldschmidt GmbH gemischt und wie in der allgemeinen Beschreibung erläutert zu einem Compound extrudiert.

### Vergleichsbeispiel 1

Analog dem Beispiel 1, aber ohne Zusatz von TEGOMER H-Si 6440P

### Vergleichsbeispiel 2

Analog dem Beispiel 2, aber ohne Zusatz von TEGOMER H-Si 6440P.

**Tabelle 2: Zusammenstellung der Materialeigenschaften**

| Eigenschaft | Beispiel 1 | Beispiel 2 | Beispiel 3 | Vergleichsbeispiel 1 | Vergleichsbeispiel 2 |
|---|---|---|---|---|---|
| Vicat, °C | 104 | 109 | 102,2 | 108 | 115 |
| MVR, ml/10min | 4,9 | 7,7 | | 3 | 4,5 |
| Glanz bei 20° | 83,3 | 80,9 | | 81,1 | 79,9 |
| Glanz bei 60° | 88,7 | 86,7 | | 87,4 | 88,1 |
| Glanz bei 85° | 99,3 | 98,8 | | 98,1 | 96,1 |
| Kratzbeständigkeit (Multifingerte st) | Keine Beschädigung bei 15N | Leichte Beschädigung bei 15N | leichte Beschädigung bei 15N | Beschädigung ab 2N | Beschädigung ab 2N |
| Wischbeständigkeit (Crockmaster) | Leichte Beschädigung nach 250 Hüben | Keine Beschädigung nach 250 Hüben | Leichte Beschädigung nach 250 Hüben | starke Beschädigung nach 100 Hüben | starke Beschädigung nach 100 Hüben |

Anhand der Beispiele erkennt man die Verbesserungen, welche durch die hier beschriebene Erfindung erreicht werden:
- Durch die Einarbeit von 3 Gew.-% TEGOMER® H-Si 6440P nimmt die Beschädigung der Oberflächen der Spritzlinge in Folge einer mechanischen Beanspruchung ab.
- Durch die Einarbeit von 3 Gew.-% TEGOMER® H-Si 6440P wird der Glanz der Oberflächen der Spritzlinge verbessert.

### Vergleichsbeispiel 3

Eine Formmasse gemäß Beispiel 1 wurde hergestellt, wobei jedoch jeweils 2 Gew.-% der in Tabelle 3 genannten Polysiloxanadditive zugesetzt wurden. Tabelle 3 enthält auch eine Probe ohne Additiv zum Vergleich.

**Tabelle 3**

| **Additiv** | **Farbeindruck / Grauschleier** | **Trübung** |
|---|---|---|
| Kein Additiv | Brilliant | Nein |
| TEGOMER® V-Si 4042P | Grau | Nein |
| TEGOMER® M-Si 2650P | Leicht grau | Nein |
| TEGOMER® RC 902 | Grau | Ja |
| Gemäß Beispiel 1 | Brilliant | Nein |
| Gemäß Beispiel 2 | Brilliant | Nein |

Tabelle 3 zeigt, dass lediglich die erfindungsgemäßen Additive brilliante Schwarztöne ohne Grauschleier und Trübung ermöglichen und handelsübliche Polysiloxan-Kratzfestadditive teilweise deutlich schlechtere Ergebnisse liefern.

## Patentansprüche

1. Formmasse umfassend
a) ein Poly(alkyl)(meth)acrylat-Matrixmaterial
b) zumindest eine Verbindung der Formel (I) 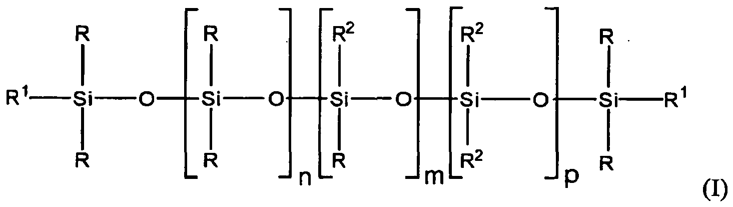 mit
R unabhängig voneinander ein Alkylrest mit 1 bis 11, bevorzugt 1 bis 4 Kohlenstoffatomen,
R¹ unabhängig voneinander R oder ein Polyesterrest,
R² unabhängig voneinander R, ein Polyesterrest oder ein Kohlenwasserstoffrest mit 12 bis 36 Kohlenstoffatomen,
n, m und p unabhängig voneinander von 0 bis 58, mit der Maßgabe,
dass N = n + m + p + 2 von 15 bis 75 ist,
und
dass alle R¹ ungleich R sind wenn alle R² gleich R sind und wenigstens ein R² ungleich R ist wenn alle R¹ gleich R sind
und/oder
dass alle Reste R¹ ungleich R sind, wenn m und p 0 sind und m oder p, vorzugsweise m ungleich 0 ist, wenn alle Reste R¹ gleich R sind.

2. Formkörper umfassend
a) ein Poly(alkyl)(meth)acrylat-Matrixmaterial
b) zumindest ein zumindest eine Verbindung der Formel (I) 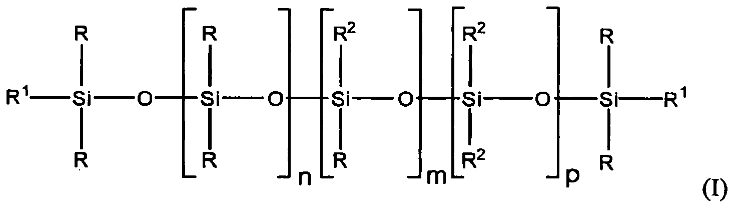 mit
R unabhängig voneinander ein Alkylrest mit 1 bis 11, bevorzugt 1 bis 4 Kohlenstoffatomen,
R¹ unabhängig voneinander R oder ein Polyesterrest,
R² unabhängig voneinander R, ein Polyesterrest oder ein Kohlenwasserstoffrest mit 12 bis 36 Kohlenstoffatomen,
n, m und p unabhängig voneinander von 0 bis 58, mit der Maßgabe,
dass N = n + m + p + 2 von 15 bis 75 ist, und
dass alle R¹ ungleich R sind wenn alle R² gleich R sind und wenigstens ein R² ungleich R ist wenn alle R¹ gleich R sind
und/oder
dass alle Reste R¹ ungleich R sind, wenn m und p 0 sind und m oder p, vorzugsweise m ungleich 0 ist, wenn alle Reste R¹ gleich R sind.

3. Formasse oder Formkörper nach Anspruch 1 oder 2, **dadurch gekennzeichnet, dass**
sie/er eingefärbt ist, bevorzugt dass sie blau, grün, braun oder schwarz eingefärbt ist.

4. Formasse oder Formkörper nach einem der Ansprüche 1 bis 3,
**dadurch gekennzeichnet, dass**
die Einsatzkonzentration der Komponente b) im Bereich von 0,1 bis 10 Gew.-%, besonders bevorzugt 0,3 bis 5 Gew.-%, ganz besonders bevorzugt im Bereich von 0,5 bis 4,0 Gew.-% und speziell bevorzugt im Bereich von 1 bis 3 Gew.-% liegt.

5. Formasse oder Formkörper nach einem der Ansprüche 1 bis 4,
**dadurch gekennzeichnet, dass**
sie/er eine oder mehrere der nachfolgenden Komponenten enthält:
Farbstoffe, Lichtstabilisatoren, IR-Absorber,
antimikrobielle Wirkstoffe, Flammschutzmittel, Thermostabilisatoren, Antioxidantien, vernetzende Polymere, faserverstärkende Zusatzstoffe organischer oder anorganischer Art.

6. Formasse oder Formkörper nach einem der Ansprüche 1 bis 5,
**dadurch gekennzeichnet, dass**
sie/er ein Schlagzähmodifizierungsmittel, bevorzugt in einem Anteil von 0,1 bis 15 Gew.-%, besonders bevorzugt 0,5 bis 10 Gew.-% und ganz besonders bevorzugt 1 bis 6 Gew.-%, jeweils bezogen auf die Gesamtmasse der Formasse, enthält.

7. Formasse oder Formkörper nach einem der Ansprüche 1 bis 6,
**dadurch gekennzeichnet, dass**
die Polyesterreste aus 3 bis 30, bevorzugt aus 8 bis 25 und besonders bevorzugt aus 15 bis 25 Estereinheiten aufgebaut sind und/oder als Startalkohole Alkoholreste aufweisen, die sich von primären ungesättigten Alkoholen ableiten, bevorzugt derart, dass sie Polyesterreste eine Struktur gemäß Formel (II) aufweisen:
-R^{q}-(R^{r})_{z}H (II)
mit
R^{q} = -(CH₂)ₓ-O-,
R^{r} = C(O)-(CH₂)_{y}-O-
x = 2 bis 10, vorzugsweise 3 bis 7, insbesondere 6 und y = 2 bis 10, vorzugsweise 3 bis 8 und bevorzugt 4 oder 5,
Z = 3 bis 30, bevorzugt aus 8 bis 25 und besonders bevorzugt aus 15 bis 25,
wobei die Polyesterreste aus gleichen oder unterschiedlichen Ausgangsmolekülen aufgebaut sind, bevorzugt sind die Polyesterreste aus gleichen Ausgangsmolekülen aufgebaut.

8. Formasse oder Formkörper nach einem der Ansprüche 1 bis 7,
**dadurch gekennzeichnet, dass**
p = 0 ist,
oder neben den Resten R¹ auch einer oder mehrere der Reste R² ein Polyesterrest ist,
oder die Reste R¹ alle gleich R, mit R vorzugsweise Methylrest, sind, R² ein Kohlenwasserstoffrest mit 12 bis 36 Kohlenstoffatomen, N ≧ 30, p = 0 und m = 30 bis 48 ist,
oder einer oder mehrere der Reste R¹ und/oder R² ein Polyesterrest ist, wobei N = 10 bis 45, p vorzugsweise 0 und m gleich 1 bis 10 ist,
oder die Reste R² entweder ausschließlich Polyesterreste oder ausschließlich Kohlenwasserstoffreste mit 12 bis 36 Kohlenstoffatomen sind,
oder die Reste R² ausschließlich Kohlenwasserstoffreste sind, wobei R¹ = R = Methyl, N = 40 bis 50 und die Reste R² Alkylreste mit 30 Kohlenstoffatomen oder ein Gemisch von Alkylresten mit 24 bis 28 Kohlenstoffatomen sind,
oder die Reste R¹ und/oder R² ausschließlich Polyesterreste sind, wobei R = Methyl und N = 20bis 45 ist, und die Polyesterreste von 15 bis 25 Estereinheiten aufweisen,
oder p = 0, R^{q} = Hexanolrest und R = Methyl ist.

9. Formasse oder Formkörper nach einem der Ansprüche 1 bis 8,
**dadurch gekennzeichnet, dass** eine Verbindung der Formel (I) mit p = 0, R^{q} = Hexanolrest und R = Methyl sowie den anderen Resten entsprechend nachfolgender Tabelle verwendet wird:
| N | M | R¹ | R² |
|---|---|---|---|
| 30 | 0 | Jeweils Polyesterrest mit 20 Caprolacton-Einheiten | - |
| 50 | 48 | Methyl | Alkylrest mit 24 bis 28 C-Atomen |
| 22 | 0 | Jeweils Polyesterrest mit 18 Caprolacton-Einheiten | |
| 30 | 2 | Jeweils Polyesterrest mit 15 Caprolacton-Einheiten | Jeweils Polyesterrest mit 15 Caprolacton-Einheiten |
| 43 | 5 | Methyl | Jeweils Polyesterrest mit 25 Caprolacton-Einheiten |
| 40 | 38 | Methyl | Alkylrest mit 24 bis 28 C-Atomen |
| 50 | 30 | Methyl | Alkylrest mit 30 C-Atomen |

10. Formasse oder Formkörper nach einem der Ansprüche 1 bis 9,
**dadurch gekennzeichnet, dass**
es sich bei Komponente a) um eine Mischung umfassend ein Copolymer (I) und ein (Co)polymer (II), wobei
Copolymer (I) der Mischung zu 80 bis 100, bevorzugt zu 90 bis 100, insbesondere zu 99 bis 100 Gew. -% aus Methylmethacrylat, Styrol und Maleinsäureanhydrid und gegebenenfalls 0 - 20, bevorzugt zu 0 - 10, insbesondere zu 0 bis 1 Gew. -% weiteren radikalisch polymerisierbaren Comonomere, bevorzugt α-Methylstyrol oder C₁- bis C₄-Alkyl(meth)acrylate, insbesondere Methylacrylat, Ethylacrylat oder Butylacrylat, insbesondere n- Butylacrylat, polymerisiert wird,
und
das (Co)polymer (II) aus 80 -100 Gew. -%, bevorzugt 90 bis 99,5 Gew.-% Methylmethacrylat Einheiten 0 - 20 Gew. -%, bevorzugt 0,5 bis 10 Gew.-% weiteren mit Methylmethacrylat redikalisch copolymerisierbaren Monomeren, bevorzugt C₁- bis C₄-Alkyl(meth)acrylate, insbesondere Methylacrylat, Ethylacrylat oder Butylacrylat, insbesondere n- Butylacrylat, polymerisiert wird.

11. Formasse oder Formkörper nach einem der Ansprüche 1 bis 9,
**dadurch gekennzeichnet, dass**
es sich bei Komponente a) um eine Polymermischung, die die folgenden Komponenten enthält:
A) ein niedermolekulares (Meth)acrylat(co)polymer, charakterisiert durch eine Lösungsviskosität in Chloroform bei 25 °C (ISO 1628 - Teil 6) von kleiner/gleich 55 ml/g
und/oder
B) ein höhermolekulares (Meth)acrylat(co)polymer, charakterisiert durch eine Lösungsviskosität in Chloroform bei 25 °C (ISO 1628 - Teil 6) von grösser/gleich 65 ml/g
und/oder
C) ein weiteres von A) verschiedenes (Meth)acrylat(co)polymer, charakterisiert durch eine Lösungsviskosität in Chloroform bei 25 °C (ISO 1628 - Teil 6) von 50 bis 55 ml/g,
wobei die Komponenten A), B) und/oder C) jeweils für sich genommen als einzelne Polymere als auch als Mischungen von Polymeren verstanden werden können, wobei A), B) und/oder C) sich zu 100 Gew.-% addieren,
handelt.

12. Formasse oder Formkörper nach einem der Ansprüche 1 bis 9,
**dadurch gekennzeichnet, dass**
es sich bei Komponente a) um eine Polymermischung, aus
einem höhermolekularen (Meth)acrylat(co)polymer, charakterisiert durch eine Lösungsviskosität in Chloroform bei 25°C (ISO 1628 - Teil 6) von 50 bis 55 ml/g
und
einem Styrol/Maleinsäureanhydridcopolymer handelt.

13. Verwendung einer Formmasse nach einem der Ansprüche 1 bis 12 zur Herstellung eines Formkörpers nach einem der Ansprüche 2 bis 12.

14. Verwendung eines Formkörpers nach einem der Ansprüche 2 bis 12 als dekorative Abdeckblenden oder funktionelle Anbauteile, in Kraftfahrzeugen, Unterhaltungselektronik oder in Haushaltgeräten.

## Claims

1. Moulding composition encompassing
a) a poly(alkyl) (meth)acrylate matrix material
b) at least one compound of the formula (I) 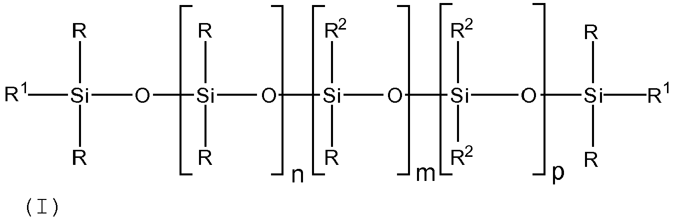 where
R, independently of one another, are an alkyl moiety having from 1 to 11, preferably from 1 to 4, carbon atoms,
R¹, independently of one another, are R or a polyester moiety,
R², independently of one another, are R, a polyester moiety or a hydrocarbon moiety having from 12 to 36 carbon atoms, n, m and p, independently of one another, are from 0 to 58,
with the proviso
that N = n + m + p + 2 is from 15 to 75,
and
no R¹ is R when all R² are R, and at least one R² is not R when all R¹ are R
and/or
no moiety R¹ is R when m and p are 0, and m or p, preferably m, is not 0 when all moieties R¹ are R.

2. Moulding encompassing
a) a poly(alkyl) (meth)acrylate matrix material
b) at least one compound of the formula (I) 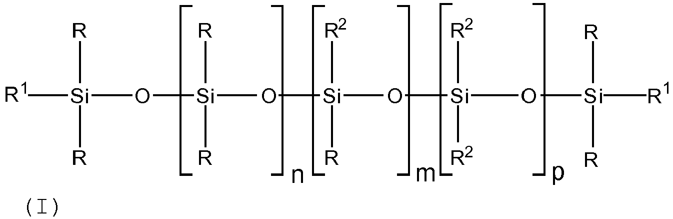 where
R, independently of one another, are an alkyl moiety having from 1 to 11, preferably from 1 to 4, carbon atoms,
R¹, independently of one another, are R or a polyester moiety,
R², independently of one another, are R, a polyester moiety or a hydrocarbon moiety having from 12 to 36 carbon atoms,
n, m and p, independently of one another, are from 0 to 58,
with the proviso
that N = n + m + p + 2 is from 15 to 75,
and
no R¹ is R when all R² are R, and at least one R² is not R when all R¹ are R
and/or
no moiety R¹ is R when m and p are 0, and m or p, preferably m, is not 0 when all moieties R¹ are R.

3. Moulding composition or moulding according to Claim 1 or 2,
**characterized in that**
it has been coloured, and preferably that it has been coloured blue, green, brown or black.

4. Moulding composition or moulding according to any of Claims 1 to 3,
**characterized in that**
the concentration used of component b) is in the range from 0.1 to 10% by weight, particularly preferably from 0.3 to 5% by weight, very particularly preferably in the range from 0.5 to 4.0% by weight and specifically preferably in the range from 1 to 3% by weight.

5. Moulding composition or moulding according to any of Claims 1 to 4,
**characterized in that**
it comprises one or more of the following components:
dyes, light stabilizers, IR absorbers, antimicrobial active ingredients, flame retardants, heat stabilizers, antioxidants, crosslinking polymers, and fibre-reinforcing additives of organic or inorganic type.

6. Moulding composition or moulding according to any of Claims 1 to 5,
**characterized in that**
it comprises an impact modifier, its proportion preferably being from 0.1 to 15% by weight, particularly preferably from 0.5 to 10% by weight and very particularly preferably from 1 to 6% by weight, based in each case on the total mass of the moulding composition.

7. Moulding composition or moulding according to any of Claims 1 to 6,
**characterized in that**
the polyester moieties are composed of from 3 to 30, preferably of from 8 to 25, and particularly preferably of from 15 to 25, ester units, and/or have, as starter alcohols, alcohol moieties which derive from primary unsaturated alcohols, preferably such that the polyester moieties have a structure according to formula (II):
-R^{q}-(R^{r})_{z}H (II)
where
R^{q} = -(CH₂)ₓ-O-,
R^{r}=C(O)-(CH₂)_{y}-O-
x = from 2 to 10, preferably from 3 to 7, in particular 6, and
y = from 2 to 10, preferably from 3 to 8, and with preference 4 or 5,
Z = from 3 to 30, preferably from 8 to 25, and particularly preferably from 15 to 25,
where the polyester moieties are composed of identical or different starting molecules, and the polyester moieties are preferably composed of identical starting molecules.

8. Moulding composition or moulding according to any of Claims 1 to 7,
**characterized in that**
p = 0,
or alongside the moieties R¹, one or more of the moieties R² is also a polyester moiety,
or all of the moieties R¹ are R, where R is preferably a methyl moiety, R² is a hydrocarbon moiety having from 12 to 36 carbon atoms, N ≧ 30, p = 0 and m = from 30 to 48,
or one or more of the moieties R¹ and/or R² is a polyester moiety, where N = from 10 to 45, p is preferably 0 and m is from 1 to 10,
or the moieties R² are either exclusively polyester moieties or exclusively hydrocarbon moieties having from 12 to 36 carbon atoms,
or the moieties R² are exclusively hydrocarbon moieties, where R¹ = R = methyl, N = from 40 to 50, and the moieties R² are alkyl moieties having 30 carbon atoms or a mixture of alkyl moieties having from 24 to 28 carbon atoms,
or the moieties R¹ and/or R² are exclusively polyester moieties, where R = methyl, and N = from 20 to 45, and the polyester moieties have from 15 to 25 ester units,
or p = 0, R^{q} = hexanol moiety and R = methyl.

9. Moulding composition or moulding according to any of Claims 1 to 8,
**characterized in that** a compound of the formula (I) is used where p = 0, R^{q} = hexanol moiety and R = methyl, and also with the other moieties corresponding to the following table:
| N | m | R¹ | R² |
|---|---|---|---|
| 30 | 0 | In each case polyester moiety having 20 caprolactone units | - |
| 50 | 48 | Methyl | Alkyl moiety having from 24 to 28 carbon atoms |
| 22 | 0 | In each case polyester moiety having 18 caprolactone units | |
| 30 | 2 | In each case polyester moiety having 15 caprolactone units | In each case polyester moiety having 15 caprolactone units |
| 43 | 5 | Methyl | In each case polyester moiety having 25 caprolactone units |
| 40 | 38 | Methyl | Alkyl moiety having from 24 to 28 carbon atoms |
| 50 | 30 | Methyl | Alkyl moiety having 30 carbon atoms |

10. Moulding composition or moulding according to any of Claims 1 to 9,
**characterized in that**
component a) is a mixture encompassing
a copolymer (I) and a (co)polymer (II), where copolymer (I) of the mixture is polymerized from from 80 to 100% by weight, preferably from 90 to 100% by weight, in particular from 99 to 100% by weight, of methyl methacrylate, styrene and maleic anhydride and, if appropriate, from 0 to 20% by weight, preferably from 0 to 10% by weight, in particular from 0 to 1% by weight, of other comonomers capable of free-radical polymerization, preferably α-methylstyrene or C₁-C₄-alkyl (meth)acrylates, in particular methyl acrylate, ethyl acrylate or butyl acrylate, in particular n-butyl acrylate,
and
the (co)polymer (II) is polymerized from from 80 to 100% by weight, preferably from 90 to 99.5% by weight, of methyl methacrylate units, and from 0 to 20% by weight, preferably from 0.5 to 10% by weight, of other monomers capable of free-radical copolymerization with methyl methacrylate, preferably C₁-C₄-alkyl (meth)acrylates, in particular methyl acrylate, ethyl acrylate or butyl acrylate, in particular n-butyl acrylate.

11. Moulding composition or moulding according to any of Claims 1 to 9,
**characterized in that**
component a) is a polymer mixture which comprises the following components:
A) a low-molecular-weight (meth)acrylate (co)polymer,
**characterized by** a solution viscosity smaller than or equal to 55 ml/g in chloroform at 25°C (ISO 1628 - part 6)
and/or
B) a relatively high-molecular-weight (meth)acrylate (co)polymer,
**characterized by** a solution viscosity greater than or equal to 65 ml/g in chloroform at 25°C (ISO 1628 - part 6)
and/or
C) another (meth)acrylate (co)polymer different from A), **characterized by** a solution viscosity of from 50 to 55 ml/g in chloroform at 25°C (ISO 1628 - part 6), where components A), B) and/or C) can each per se be individual polymers or else a mixture of polymers, where the entirety of A), B) and/or C) is 100% by weight.

12. Moulding composition or moulding according to any of Claims 1 to 9,
**characterized in that**
component a) is a polymer mixture of a relatively high-molecular-weight (meth)acrylate (co)polymer,
**characterized by** a solution viscosity of from 50 to 55 ml/g in chloroform at 25°C (ISO 1628 - part 6)
and
of a styrene/maleic anhydride copolymer.

13. Use of a moulding composition according to any of Claims 1 to 12 for producing a moulding according to any of Claims 2 to 12.

14. Use of a moulding according to any of Claims 2 to 12 as decorative panels or functional add-on parts, in motor vehicles or consumer electronics or in household equipment.

## Revendications

1. Masse de moulage, comprenant
a) un matériau matrice de poly((méth)acrylate d'alkyle)
b) au moins un composé de formule (I) 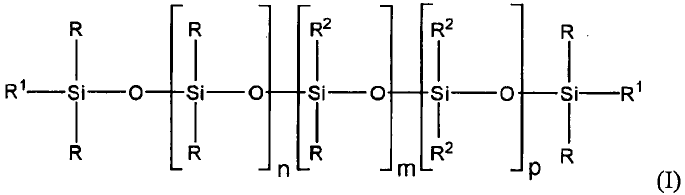 où
R représente, indépendamment, un radical alkyle comprenant 1 à 11, de préférence 1 à 4 atomes de carbone,
R¹ représente, indépendamment, R ou un radical polyester,
R² représente, indépendamment, R, un radical polyester ou un radical hydrocarboné comprenant 12 à 36 atomes de carbone,
n, m et p représentent, indépendamment l'un de l'autre, 0 à 58, à condition
que N = n + m + p + 2 vaille 15 à 75, et
que tous les R¹ soient différents de R lorsque tous les R² représentent R et qu'au moins un R² soit différent de R lorsque tous les R¹ représentent R et/ou
que tous les radicaux R¹ soient différents de R, lorsque m et p valent 0 et que m ou p, de préférence m, soit différent de 0, lorsque tous les radicaux R¹ représentent R.

2. Corps moulé, comprenant
a) un matériau matrice de poly((méth)acrylate d'alkyle)
b) au moins un composé de formule (I) 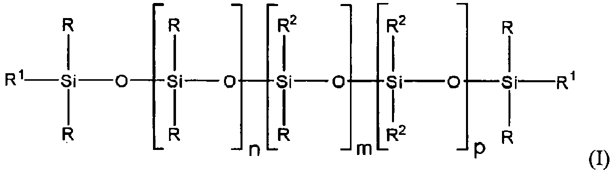 où
R représente, indépendamment, un radical alkyle comprenant 1 à 11, de préférence 1 à 4 atomes de carbone,
R¹ représente, indépendamment, R ou un radical polyester,
R² représente, indépendamment, R, un radical polyester ou un radical hydrocarboné comprenant 12 à 36 atomes de carbone,
n, m et p représentent, indépendamment l'un de l'autre, 0 à 58, à condition que N = n + m + p + 2 vaille 15 à 75, et que tous les R¹ soient différents de R lorsque tous les R² représentent R et qu'au moins un R² soit différent de R lorsque tous les R¹ représentent R et/ou
que tous les radicaux R¹ soient différents de R, lorsque m et p valent 0 et que m ou p, de préférence m, soit différent de 0, lorsque tous les radicaux R¹ représentent R.

3. Masse de moulage ou corps moulé selon la revendication 1 ou 2, caractérisé (e) en ce qu'elle/il est coloré(e), de préférence en ce qu'elle/il est coloré(e) en bleu, vert, brun ou noir.

4. Masse de moulage ou corps moulé selon l'une quelconque des revendications 1 à 3, caractérisé(e) en ce que la concentration de départ du composant b) se situe dans la plage de 0,1 à 10% en poids, de manière particulièrement préférée de 0,3 à 5% en poids, de manière tout particulièrement préférée dans la plage de 0,5 à 4,0% en poids et en particulier de préférence dans la plage de 1 à 3% en poids.

5. Masse de moulage ou corps moulé selon l'une quelconque des revendications 1 à 4, caractérisé(e) en ce qu'elle/il contient un ou plusieurs des composants suivants :
colorants, stabilisateurs à la lumière, absorbants des IR, substances actives antimicrobiennes, agents ignifuges, thermostabilisateurs, antioxydants, polymères réticulants, additifs de renforcement à base de fibres de type organique ou inorganique.

6. Masse de moulage ou corps moulé selon l'une quelconque des revendications 1 à 5, caractérisé(e) en ce qu'elle/il contient un agent de modification de la résilience, de préférence en une proportion de 0,1 à 15% en poids, de manière particulièrement préférée de 0,5 à 10% en poids et de manière tout particulièrement préférée de 1 à 6% en poids, à chaque fois par rapport à la masse totale de la masse de moulage.

7. Masse de moulage ou corps moulé selon l'une quelconque des revendications 1 à 6, caractérisé(e) en ce que les radicaux polyester sont formés à partir de 3 à 30, de préférence de 8 à 25 et de manière particulièrement préférée de 15 à 25 unités d'ester et/ou présentent, comme alcools de départ, des radicaux alcool qui sont dérivés d'alcools primaires insaturés, de préférence de manière telle que les radicaux polyester présentent une structure selon la formule (II) :
-R^{q}-(R^{r})_{z}H (II)
où
R^{q} = -(CH₂)ₓ-O-,
R^{r} = C(O)-(CH₂)_{y}-O-
x = 2 à 10, de préférence 3 à 7, en particulier 6 et
y = 2 à 10, de préférence 3 à 8 et de préférence 4 ou 5,
z = 3 à 30, de préférence 8 à 25 et de manière particulièrement préférée 15 à 25,
les radicaux polyester étant formés à partir de molécules de départ identiques ou différentes, de préférence les radicaux polyester sont formés à partir de molécules de départ identiques.

8. Masse de moulage ou corps moulé selon l'une quelconque des revendications 1 à 7, caractérisé(e) en ce que p = 0, ou
outre les radicaux R¹, un ou plusieurs des radicaux R² sont également un radical polyester, ou
les radicaux R¹ représentent tous R, R représentant de préférence un radical méthyle, R² représente un radical hydrocarboné comprenant 12 à 36 atomes de carbone, N ≥ 30, p = 0 et m = 30 à 48, ou
un ou plusieurs des radicaux R¹ et/ou R² représentent un radical polyester, où N = 10 à 45, p vaut de préférence 0 et m vaut 1 à 10, ou
les radicaux R² représentent soit exclusivement des radicaux polyester soit exclusivement des radicaux hydrocarbonés comprenant 12 à 36 atomes de carbone, ou les radicaux R² représentent exclusivement des radicaux hydrocarbonés, où R¹ = R = méthyle, N = 40 à 50 et les radicaux R² sont des radicaux alkyle comprenant 30 atomes de carbone ou un mélange de radicaux alkyle comprenant 24 à 28 atomes de carbone, ou
les radicaux R¹ et/ou R² représentent, exclusivement, des radicaux polyester, où R = méthyle et N = 20 à 45, et les radicaux polyester présentent 15 à 25 unités ester, ou
p = 0, R^{q} = un radical hexanol et R = méthyle.

9. Masse de moulage ou corps moulé selon l'une quelconque des revendications 1 à 8, caractérisé(e) en ce qu'un composé de formule (I) avec p = 0, R^{q} = un radical hexanol et R = méthyle ainsi que les autres radicaux selon le tableau suivant est utilisé :
| N | m | R¹ | R² |
|---|---|---|---|
| 30 | 0 | à chaque fois un radical polyester comprenant 20 unités caprolactone | - |
| 50 | 48 | méthyle | un radical alkyle comprenant 24 à 28 atomes de carbone, |
| 22 | 0 | à chaque fois un radical polyester comprenant 18 unités caprolactone | |
| 30 | 2 | à chaque fois un radical polyester comprenant 15 unités caprolactone | à chaque fois un radical polyester comprenant 15 unités caprolactone |
| 43 | 5 | méthyle | à chaque fois un radical polyester comprenant 25 unités caprolactone |
| 40 | 38 | méthyle | un radical alkyle comprenant 24 à 28 atomes de carbone, |
| 50 | 30 | méthyle | un radical alkyle comprenant 30 atomes de carbone |

10. Masse de moulage ou corps moulé selon l'une quelconque des revendications 1 à 9, caractérisé(e) en ce que, pour le composant (a), il s'agit d'un mélange comprenant
un copolymère (I) et un (co)polymère (II), le copolymère (I) du mélange étant polymérisé à raison de 80 à 100, de préférence de 90 à 100, en particulier de 99 à 100% en poids à partir de méthacrylate de méthyle, de styrène et d'anhydride de l'acide maléique et le cas échéant à raison de 0-20, de préférence de 0-10, en particulier de 0 à 1% en poids à partir d'autres comonomères polymérisables par voie radicalaire, de préférence l'α-méthylstyrène ou les (méth)acrylates de C₁-C₄-alkyle, en particulier l'acrylate de méthyle, l'acrylate d'éthyle ou l'acrylate de butyle, en particulier l'acrylate de n-butyle, et
le (co)polymère (II) est polymérisé à partir de 80-100% en poids, de préférence 90 à 99,5% en poids d'unités méthacrylate de méthyle, 0-20 % en poids, de préférence 0,5 à 10% en poids d'autres monomères copolymérisables par voie radicalaire avec le méthacrylate de méthyle, de préférence les (méth)acrylates de C₁-C₄-alkyle, en particulier l'acrylate de méthyle, l'acrylate d'éthyle ou l'acrylate de butyle, en particulier l'acrylate de n-butyle.

11. Masse de moulage ou corps moulé selon l'une quelconque des revendications 1 à 9, caractérisé(e) en ce qu'il s'agit, pour le composant a), d'un mélange de polymères qui contient les composants suivants :
A) un (co)polymère de (méth)acrylate de bas poids moléculaire, **caractérisé par** une viscosité en solution dans du chloroforme à 25°C (ISO 1628 - partie 6) inférieure/égale à 55 ml/g et/ou
B) un (co)polymère de (méth)acrylate de haut poids moléculaire, **caractérisé par** une viscosité en solution dans du chloroforme à 25°C (ISO 1628 - partie 6) supérieure/égale à 65 ml/g et/ou
C) un autre (co)polymère de (méth)acrylate différent de A), **caractérisé par** une viscosité en solution dans du chloroforme à 25°C (ISO 1628 - partie 6) de 50 à 55 ml/g, les composants A), B) et/ou C) à chaque fois pris en soi pouvant être considérés comme des polymères uniques ainsi que comme des mélanges de polymères, A), B) et/ou C) s'ajoutant à 100% en poids.

12. Masse de moulage ou corps moulé selon l'une quelconque des revendications 1 à 9, caractérisé (e) en ce qu'il s'agit, pour le composant a), d'un mélange de polymères constitué par un (co)polymère de (méth)acrylate de haut poids moléculaire, **caractérisé par** une viscosité en solution dans du chloroforme à 25°C (ISO 1628 - partie 6) de 50 à 55 ml/g et un copolymère de styrène/anhydride de l'acide maléique.

13. Utilisation d'une masse de moulage selon l'une quelconque des revendications 1 à 12 pour la préparation d'un corps moulé selon l'une quelconque des revendications 2 à 12.

14. Utilisation d'un corps moulé selon l'une quelconque des revendications 2 à 12 comme caches décoratifs ou accessoires fonctionnels, dans des véhicules automobiles, dans l'électronique grand public ou dans des appareils domestiques.
